# EUROPÄISCHE PATENTSCHRIFT

(11) **EP 3 739 708 B1**
(45) Veröffentlichungstag und Bekanntmachung des Hinweises auf die Patenterteilung: **01.11.2023**
(21) Anmeldenummer: 19174839.1
(22) Anmeldetag: 16.05.2019
(51) Int. Cl.: H02H 9/02, H01F 29/14

(54) **KURZSCHLUSSSTROMBEGRENZER**
SHORT-CIRCUIT CURRENT LIMITER
LIMITEUR DE COURANT DE COURT-CIRCUIT

(43) Veröffentlichungstag der Anmeldung: 18.11.2020
(73) Patentinhaber: Siemens Energy Global GmbH & Co. KG, 81739 München (DE)
(72) Erfinder: Hamberger, Peter, 4202 Kirchschlag bei Linz (AT)

(56) Entgegenhaltungen:
- EP-A1- 0 183 015
- WO-A1-2018/138723
- DE-A1- 1 588 468
- FR-A- 588 305
- GB-A- 1 314 270
- US-A- 3 219 918

## Beschreibung

### GEBIET DER ERFINDUNG

Die Erfindung betrifft einen Kurzschlussstrombegrenzer zur Begrenzung des Stroms in Hoch- oder Mittelspannung führenden Leitern, sowie ein Verfahren zur Begrenzung des Kurzschlussstroms in einem Hoch- oder Mittelspannung führenden Leiter.

### STAND DER TECHNIK

Aus der US 3219 918 A ist ein Kurzschlussstrombegrenzer bekannt. Der vorbekannte Kurzschlussstrombegrenzer verfügt über einen Kern mit drei Schenkeln, die jeweils von einer Wicklung umgeben sind. Durch die mittlere Wicklung kann ein Gleichstrom fließen, der den Kern in die Sättigung treibt.

Weiterer Stand der Technik ist aus der FR 588 305 A, der WO 2018/138723 A1 und der DE 1 5 88 468 A1 bekannt.

Durch den Ausbau der Vernetzung der Übertragungsleitungen im Hoch- und Mittelspannungsnetz und durch das Einbinden zusätzlicher Generatoren, wie Kleinkraftwerke, wird die Kurzschlussleistung der Stromnetze immer größer. Die Kurzschlussleistung ist eine Bemessungsgröße, um die Beanspruchung einer elektrischen Anlage und dabei insbesondere das Schaltvermögen von Leistungsschaltern zu quantifizieren. Ein Leistungsschalter muss dabei über eine über der Kurzschlussleistung liegende Ausschaltleistung verfügen, um im Kurzschlussfall sicher und ohne Schäden am Schalter den Stromfluss trennen zu können. Bei der nachträglichen Erweiterung von Stromnetzen und der damit verbundenen Steigerung der Kurzschlussleistung kann es dazu kommen, dass bereits bestehende Leistungsschalter nicht auf die dann höhere Kurzschlussleistung ausgelegt sind. Um den kostenintensiven Austausch der Schalter zu vermeiden, können sogenannte Kurzschlussstrombegrenzer eingesetzt werden.

Typische Einsatzbereiche sind mehrfach parallel gespeiste Sammelschienenabschnitte auf Mittelspannungsebene, teilweise auch auf der Höchstspannungsebene, welche im Normalbetrieb über Kurzschlussstrombegrenzer zu einer Sammelschiene verbunden sind. Im Normalbetriebsfall wird durch die Parallelschaltung eine geringe Netzimpedanz im Bereich der Sammelschiene erzielt. Im Kurzschlussfall wird durch die Kurzschlussstrombegrenzer die Sammelschiene in mehrere getrennte Teilabschnitte aufgespalten, womit der Kurzschlussstrom begrenzt wird und der nachfolgende Ausschaltvorgang ohne Schaden am Leistungsschalter erfolgen kann.

Übliche Strombegrenzer auf Mittelspannungsebene sind pyrotechnische Strombegrenzer, welche im Kurzschlussfall durch eine Sprengladung in einem rohrförmigen Verbindungsstück die einzelnen Sammelschienenabschnitte vor dem Auslösen des Leistungsschalters auftrennen. Die Zündung erfolgt durch eine elektronische Schaltung, welche den Kurzschluss vor dem Ausschaltvorgang der Leistungsschalter schnell und sicher erkennen muss. Nachteile sind der Wartungsaufwand und die technisch aufwändige Erkennung eines Kurzschlusses zum Auslösen der Sprengladung, da Fehlauslösungen, beispielsweise durch hohe Einschaltströme oder auch Blitzentladungen, vermieden werden müssen.

Weiters gibt es auch Vorrichtungen mit einem Bypass über einen Parallelpfad mit erhöhter Impedanz.

Daneben gibt es auch supraleitende Strombegrenzer, welche zu den resistiven Strombegrenzern zählen. Dabei werden im normalen Betriebsfall die Sammelschienenabschnitte über supraleitende Kupplungen verbunden, welche im Kurzschlussfall hochohmig werden und so den Strom limitieren. Nachteilig hierbei sind die für Supraleiter notwendigen Kühleinrichtungen.

### DARSTELLUNG DER ERFINDUNG

Eine Aufgabe der Erfindung besteht darin, einen Kurzschlussstrombegrenzer zu schaffen, der ohne Pyrotechnik, Supraleiter oder andere rein resistive Strombegrenzer auskommt.

Diese Aufgabe wird durch einen Kurzschlussstrombegrenzer gemäß Anspruch 1 dadurch gelöst, dass der Kurzschlussstrombegrenzer einen elektrischen Transformator mit einem ferromagnetischen Kern umfasst,
dass zwei Schenkel des Kerns je eine Wicklung tragen, wobei die beiden Wicklungen zueinander in Serie geschaltet sind und der zu überwachende Leiter an diese Serienwicklungen angeschlossen ist,
und dass an einem weiteren Schenkel des Kerns eine Gleichstromwicklung vorgesehen ist, welche ausgebildet ist, im Nennbetrieb den Kern in Sättigung zu halten.

Ein solcher Kern besteht in der Regel aus mehreren parallel zueinander verlaufenden Schenkeln, die an Ihren Enden mit einem Joch verbunden sind. Der gesamte Kern ist aus einem ferromagnetischen Material gefertigt, z.B. aus Eisenblechen. Pro Phase des zu überwachenden elektrischen Leiters ist ein Transformator mit einem ferromagnetischen Kern vorgesehen, der zumindest drei Schenkel (zwei für die Serienwicklungen, einer für die Gleichstromwicklung) aufweist.

Eine Serienwicklung selbst kann natürlich auch aus mehreren Leitern oder Unterwicklungen bestehen.

Es wäre auch denkbar, dass an weiteren Schenkeln des Kerns weitere Gleichstromwicklungen vorgesehen sind. Es wäre auch denkbar, dass eine Gleichstromwicklung am selben Schenkel wie eine Serienwicklung ist. Es wäre auch denkbar, dass eine Gleichstromwicklung an einem Joch ist.

Die Erfindung nutzt das nichtlineare Verhalten von ferromagnetischen Kreisen zur schnellen Begrenzung von Kurzschlussströmen und in weiterer Folge einen Transformator zum nachhaltigen Begrenzen des Kurzschlussstroms durch Erhöhung der Impedanz. Im Normal- oder Nennbetrieb der zu überwachenden Leitung ist der von der Gleichstromwicklung im Kern erzeugte Gleichfluss so groß, dass trotz überlagertem Wechselfluss der Serienwicklungen der Kern immer in Sättigung bleibt, sodass die Serienwicklungen eine sehr kleine Impedanz haben bzw. einen sehr kleine Spannungsabfall erzeugen, was im Normalbetrieb ja gewünscht ist. Erst im Fall eines Kurzschlusses, der im Allgemeinen durch ein transientes Verhalten mit einem abklingenden Gleichstromanteil gekennzeichnet ist, verlässt der Kern die Sättigung. Dadurch wird in einer der Serienwicklungen eine Spannung induziert, die dem - durch den Kurzschluss verursachten - Anstieg des Stroms entgegenwirkt.

Zusätzlich zu dieser Begrenzung des Strom-Peaks eines Kurzschlusses kann sich daran eine Dauerbegrenzung des Stroms der zu überwachenden Leitung anschließen. Zu diesem Zweck ist erfindungsgemäß zu jeder Serienwicklung am gleichen Schenkel eine Sekundärwicklung vorgesehen, welche eine Spannung eingeprägt hat, die den Kurzschlussstrom begrenzt. Eine Sekundärwicklung kann konzentrisch zu einer Serienwicklung angeordnet sein. Die Sekundärwicklung kann dabei mit der Serienwicklung in Richtung des Schenkels überlappen.

Im Rahmen der Erfindung ist ferner eine Steuerung vorgesehen, die ausgebildet ist, die Gleichstromwicklung nach dem Abklingen des Strom-Peaks eines Kurzschlusses abzuschalten und bei oder nach dem Abschalten der Gleichstromwicklung die Sekundärwicklungen dazuzuschalten.

Eine weitere Ausführungsform der Erfindung sieht vor, dass zur Reduzierung der Amperewindungen der Serienwicklungen ein Hilfstransformator in die zu überwachende Leitung geschaltet ist, wobei die Primärseite des Hilfstransformators in Serie zu den Serienwicklungen geschaltet ist und die Sekundärseite des Hilfstransformators in Serie zu den Sekundärwicklungen geschaltet und auf diese rückgeführt ist.

Die Erfindung betrifft auch ein Verfahren zur Begrenzung des Kurzschlussstroms in einem Hoch- oder Mittelspannung führenden Leiter nach Anspruch 3.

Weiters kann vorgesehen sein, dass zur Reduzierung der Amperewindungen der Serienwicklungen ein Hilfstransformator in die zu überwachende Leitung geschaltet ist, wobei die Primärseite des Hilfstransformators in Serie zu den Serienwicklungen geschaltet ist und die Sekundärseite des Hilfstransformators in Serie zu den Sekundärwicklungen geschaltet und auf diese rückgeführt ist.

### KURZE BESCHREIBUNG DER FIGUREN

Zur weiteren Erläuterung der Erfindung wird im nachfolgenden Teil der Beschreibung auf die Figuren Bezug genommen, aus denen weitere vorteilhafte Einzelheiten und mögliche Einsatzgebiete der Erfindung zu entnehmen sind. Die Figuren sind als beispielhaft zu verstehen und sollen den Erfindungscharakter zwar darlegen, ihn aber keinesfalls einengen oder gar abschließend wiedergeben. Es zeigt:
- Fig. 1: eine schematische Darstellung eines erfindungsgemäßen Kurzschlussstrombegrenzers,
- Fig. 2: ein Diagramm der magnetischen Flussdichte B über der magnetischen Feldstärke H, und

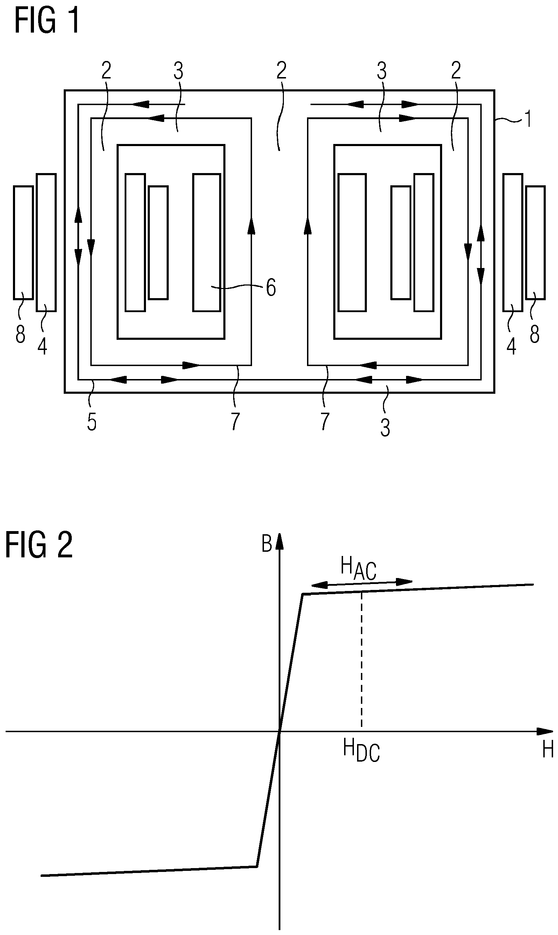

- Fig. 2: eine schematische Darstellung eines Hilfstransformators im Kurzschlussstrombegrenzer gemäß Fig. 1.

### WEGE ZUR AUSFÜHRUNG DER ERFINDUNG

Fig. 1 zeigt einen erfindungsgemäßen Kurzschlussstrombegrenzer. Dieser umfasst einen ferromagnetischen Kreis in Form eines Einphasen-Mantelkerns, also eines Einphasentransformators mit zwei Wicklungen und einem magnetischen Kreis, der auch als Kern 1 bezeichnet wird. Der Kern 1, in der Regel ein Eisenkern, besteht aus Schenkeln 2, auf denen Wicklungen sitzen, und Jochen 3, die die Schenkel miteinander verbinden. Hier sind drei Schenkel 2 vorgesehen, wobei die beiden Außenschenkel die Wicklungen des Transformators tragen. Diese Wicklungen sind in Reihe in die zu überwachende Leitung geschaltet, werden daher im Folgenden als Serienwicklungen 4 bezeichnet und erregen im Kern einen Wechselfluss 5, der hier durch eine Linie mit Doppelpfeilen dargestellt ist. Am Mittelschenkel sitzt eine Wicklung, die von Gleichstrom durchflossen ist und daher als Gleichstromwicklung 6 bezeichnet wird. Damit wird im Kern 1 ein Gleichfluss 7 erzeugt.

Ist der Gleichfluss 7 nun so groß, dass im Nennbetrieb (wo Nennstrom über die zu überwachende Leitung fließt) trotz überlagertem Wechselfluss 5 der Kern 1 immer in Sättigung bleibt, so haben die Serienwicklungen 4 eine sehr kleine Impedanz bzw. erzeugen einen sehr kleinen Spannungsabfall, was im Normalbetrieb auch gewünscht ist. In Fig. 2 ist für den Kern 1 die magnetische Flussdichte B über der magnetischen Feldstärke H aufgetragen. Der Gleichfluss 7 entspricht der magnetischen Feldstärke H_{DC}, der Wechselfluss 5 der magnetischen Flussdichte H_{AC}. Der Doppelpfeil bei H_{AC} gibt den Bereich an, in dem der Wechselfluss 5 liegt.

Tritt nun ein Kurzschluss auf, so wird der Wechselfluss 5 aufgrund des höheren Kurzschlussstroms größer und ein Teilkreis des Kerns 1 verlässt die Sättigung. Dadurch wird in einer der Serienwicklungen 4 eine Spannung induziert, die dem - durch den Kurzschluss verursachten - Anstieg des Stroms entgegenwirkt. Bei ferromagnetischen Stoffen tritt bekannterweise die Sättigungsmagnetisierung in Erscheinung, ein materialspezifischer Höchstwert der Magnetisierung M, der auch durch Erhöhen der äußeren magnetischen Feldstärke H nicht überschritten werden kann. Die Ableitung der Magnetisierung nach der Feldstärke, die differentielle magnetische Suszeptibilität, verschwindet im Sättigungsbereich. Trägt man für einen Werkstoff die magnetische Flussdichte B gegenüber der von außen aufgebrachten magnetischen Feldstärke H in einem Diagramm auf, ergibt sich die Hysteresekurve (Magnetisierungskurve). Die Abflachung der Steigung kennzeichnet dabei anschaulich den Beginn der Sättigungsmagnetisierung, man kann auch vom Erreichen der Sättigungsflussdichte bzw. der Sättigungsinduktion sprechen.

Nachdem der erste und größte Strom-Peak durch den Verlust der Sättigung begrenzt wurde, wird der Gleichstrom in der Gleichstromwicklung 6 abgeschaltet und eine Sekundärwicklung 8 mit einer Impedanz dazugeschaltet. Je eine Sekundärwicklung 8 ist an den beiden Außenschenkeln des Kerns 1 vorgesehen. Sie ist hier jeweils außerhalb der Serienwicklung 4, konzentrisch zu dieser vorgesehen. Da der Gleichfluss 7 nicht mehr vorhanden ist, arbeitet die Vorrichtung nun als normaler Transformator. In den Serienwicklungen 4 wird, je nach Impedanz der Sekundärwicklungen 8, im Sekundärkreis eine Spannung eingeprägt, welche den Kurzschlussstrom begrenzt. Auch die beiden Sekundärwicklungen 8 sind, wie die beiden Serienwicklungen 4, in Serie zueinander geschaltet.

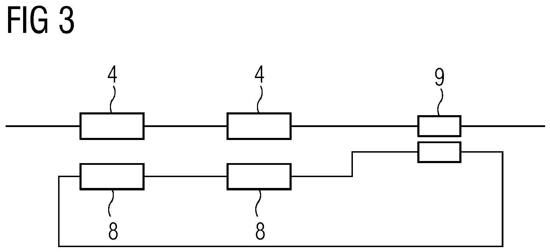

Damit der Kern 1 kleiner dimensioniert werden kann, ist es wünschenswert, die wirksamen Amperewindungen der Serienwicklungen 4 im magnetischen Kreis des Kerns 1 zu reduzieren. Dies kann erreicht werden, indem ein Teil der Amperewindungen kompensiert wird, wie in Fig. 3 dargestellt. Zusätzlich zu den Serienwicklungen 4 wird in die zu überwachende Leitung ein Hilfstransformator 9 geschaltet. Die Primärseite des Hilfstransformators 9 ist in Serie zu den Serienwicklungen 4 geschaltet, die Sekundärseite des Hilfstransformators 9 ist in Serie zu den Sekundärwicklungen 8 geschaltet und auf diese rückgeführt. Das heißt, der zu überwachende Leiter enthält die Serienwicklungen 4 und die Primärseite bzw. -wicklung des Hilfstransformators 9. Die Sekundärspulen 8 und die Sekundärseite bzw. -wicklung des Hilfstransformators 9 bilden eine geschlossene Schleife.

Der Sekundärstrom des Hilfstransformators 9 wird in die Vorrichtung, genauer in die Sekundärwicklungen 8, rückgeführt, um die Amperewindungen der Serienwicklungen 4 zu reduzieren. Die Amperewindung Aw ist eine Maßeinheit für die magnetische Durchflutung. Ein elektrischer Strom von 1 A ruft in einer einzelnen Leiterschleife die Durchflutung 1 Aw hervor.

### BEZUGSZEICHENLISTE

- 1: Kern (magnetischer Kreis)
- 2: Schenkel
- 3: Joch
- 4: Serienwicklung
- 5: Wechselfluss
- 6: Gleichstromwicklung
- 7: Gleichfluss
- 8: Sekundärwicklung
- 9: Hilfstransformator

## Patentansprüche

1. Kurzschlussstrombegrenzer zur Begrenzung des Stroms in Hoch- oder Mittelspannung führenden Leitern, wobei der Kurzschlussstrombegrenzer einen elektrischen Transformator mit einem ferromagnetischen Kern (1) umfasst, wobei zwei Schenkel (2) des Kerns je eine Wicklung tragen, wobei die beiden Wicklungen zueinander in Serie geschaltet sind und der zu überwachende Leiter an diese Serienwicklungen (4) angeschlossen ist, und wobei an einem weiteren Schenkel (2) des Kerns eine Gleichstromwicklung (6) vorgesehen ist, welche ausgebildet ist, im Nennbetrieb den Kern (1) in Sättigung zu halten, wobei zu jeder Serienwicklung (4) am gleichen Schenkel (2) eine Sekundärwicklung (8) vorgesehen ist, welche eine Spannung eingeprägt hat, die den Kurzschlussstrom begrenzt und wobei eine Steuerung vorgesehen ist, die ausgebildet ist, die Gleichstromwicklung (6) nach dem Abklingen des Strom-Peaks eines Kurzschlusses abzuschalten und bei oder nach dem Abschalten der Gleichstromwicklung die Sekundärwicklungen (8) dazuzuschalten.

2. Kurzschlussstrombegrenzer nach Anspruch 1, wobei zur Reduzierung der Amperewindungen der Serienwicklungen (4) ein Hilfstransformator (9) in die zu überwachende Leitung geschaltet ist, wobei die Primärseite des Hilfstransformators (9) in Serie zu den Serienwicklungen (4) geschaltet ist und die Sekundärseite des Hilfstransformators (9) in Serie zu den Sekundärwicklungen (8) geschaltet und auf diese rückgeführt ist.

3. Verfahren zur Begrenzung des Kurzschlussstroms in einem Hoch- oder Mittelspannung führenden Leiter, insbesondere unter Verwendung eines Kurzschlussstrombegrenzers nach einem der Ansprüche 1 bis 2,
wobei der zu überwachende Leiter an die Serienwicklungen (4) eines elektrischen Transformators angeschlossen wird,
wobei der Transformator einen ferromagnetischen Kern (1) umfasst und zwei Schenkel (2) des Kerns je eine Serienwicklung (4) tragen, die zueinander in Serie geschaltet werden,
wobei an einem weiteren Schenkel (2) des Kerns eine Gleichstromwicklung (6) angeordnet wird, welche im Nennbetrieb den Kern (1) in Sättigung hält und nach dem Abklingen des Strom-Peaks eines Kurzschlusses die Gleichstromwicklung (6) abgeschaltet wird, und
wobei bei oder nach dem Abschalten der Gleichstromwicklung (6) Sekundärwicklungen (8) dazugeschaltet werden, wobei je eine Sekundärwicklung (8) am gleichen Schenkel (2) wie eine Serienwicklung (4) vorgesehen ist, welche Sekundärwicklung (8) eine Spannung eingeprägt hat, die den Kurzschlussstrom begrenzt.

4. Verfahren nach Anspruch 3, wobei zur Reduzierung der Amperewindungen der Serienwicklungen (4) ein Hilfstransformator (9) in die zu überwachende Leitung geschaltet ist, wobei die Primärseite des Hilfstransformators (9) in Serie zu den Serienwicklungen (4) geschaltet ist und die Sekundärseite des Hilfstransformators (9) in Serie zu den Sekundärwicklungen (8) geschaltet und auf diese rückgeführt ist.

## Claims

1. Short-circuit current limiter for limiting the current in conductors carrying high-voltage or medium-voltage, wherein the short-circuit current limiter comprises an electrical transformer having a ferromagnetic core (1), wherein two limbs (2) of the core each carry a winding, wherein the two windings are connected in series with one another and the conductor to be monitored is connected to these series windings (4), and wherein a DC current winding (6) is provided on a further limb (2) of the core and is designed to hold the core (1) in saturation during rated operation, wherein a secondary winding (8) is provided for each series winding (4) on the same limb (2) and has applied a voltage that limits the short-circuit current, and wherein a controller is provided that is designed to disconnect the DC current winding (6) after the decay of the current peak of a short circuit and to connect the secondary windings (8) in during or after the disconnection of the DC current winding.

2. Short-circuit current limiter according to Claim 1, wherein an auxiliary transformer (9) is connected into the line to be monitored in order to reduce the ampere turns of the series windings (4), wherein the primary side of the auxiliary transformer (9) is connected in series with the series windings (4) and the secondary side of the auxiliary transformer (9) is connected in series with the secondary windings (8) and is fed back thereto.

3. Method for limiting the short-circuit current in a conductor carrying high-voltage or medium-voltage, in particular using a short-circuit current limiter according to either of Claims 1 and 2, wherein the conductor to be monitored is connected to the series windings (4) of an electrical transformer, wherein the transformer comprises a ferromagnetic core (1) and two limbs (2) of the core each carry a series winding (4) that are connected in series with one another, wherein a DC current winding (6) is arranged on a further limb (2) of the core and holds the core (1) in saturation during rated operation, and the DC current winding (6) is disconnected after the decay of the current peak of a short circuit, and wherein secondary windings (8) are connected in during or after the disconnection of the DC current winding (6), wherein a respective secondary winding (8) is provided on the same limb (2) as a series winding (4), which secondary winding (8) has applied a voltage that limits the short-circuit current.

4. Method according to Claim 3, wherein an auxiliary transformer (9) is connected into the line to be monitored in order to reduce the ampere turns of the series windings (4), wherein the primary side of the auxiliary transformer (9) is connected in series with the series windings (4) and the secondary side of the auxiliary transformer (9) is connected in series with the secondary windings (8) and is fed back thereto.

## Revendications

1. Limiteur de courant de court-circuit pour la limitation du courant dans des conducteurs conduisant la haute tension ou la moyenne tension, dans lequel
le limiteur de courant de court-circuit comprend un transformateur électrique ayant un noyau (1) ferromagnétique
dans lequel
deux branches (2) du noyau porte chacune un enroulement, dans lequel les deux enroulements sont montés entre eux en série et le conducteur à contrôler est raccordé à ces enroulements (4) en série,
et dans lequel il est prévu sur une autre branche (2) du noyau un enroulement (6) en courant continu qui est constitué pour, dans le fonctionnement nominal, maintenir le noyau (1) en saturation, dans lequel il est prévu pour chaque enroulement (4) en série, sur la même branche (2), un enroulement (8) secondaire sur lequel a été appliquée une tension qui limite le courant de court-circuit, et dans lequel il est prévu une commande qui est constituée pour mettre hors circuit l'enroulement (6) en courant continu après l'amortissement du pic de courant d'un court-circuit, et lors de la mise hors circuit ou après la mise hors circuit de l'enroulement au courant continu, mettre en circuit les enroulements (8) secondaires.

2. Limiteur de courant de court-circuit suivant la revendication 1, dans lequel pour la réduction des ampères-tours des enroulements (4) en série, un transformateur (9) auxiliaire est monté dans la ligne à contrôler, dans lequel le côté primaire du transformateur (9) auxiliaire est monté en série avec les enroulements (4) en série et le côté secondaire du transformateur (9) auxiliaire est monté en série avec les enroulements secondaires, et revient sur ceux-ci.

3. Procédé de limitation du courant du court-circuit dans un conducteur conduisant la haute tension ou la moyenne tension, en particulier en utilisant un limiteur de courant de court-circuit suivant l'une des revendications 1 à 2,
dans lequel on raccorde le conducteur à contrôler aux enroulements (4) en série d'un transformateur électrique, dans lequel le transformateur comprend un noyau (1) ferromagnétique et deux branches (2) du noyau portent chacune un enroulement (4) en série qui sont montés en série l'un avec l'autre,
dans lequel on monte un enroulement(6) en courant continu sur une autre branche (2) du noyau qui, en fonctionnement nominal,
maintient le noyau (1) en saturation, et après l'amortissement du pic de courant d'un court-circuit, on met hors circuit l'enroulement (6) en courant continu et,
dans lequel lors ou après la mise en circuit de l'enroulement (6) en courant continu, on met en circuit des enroulements (8) secondaires, dans lequel il est prévu respectivement un enroulement (8) secondaire sur la même branche (2), ainsi qu'un enroulement (4) en série qui a appliqué à l'enroulement (8) secondaire une tension qui limite le courant de court-circuit.

4. Procédé suivant la revendication 3, dans lequel
pour réduire les ampères-tours des enroulements (4) en série, un transformateur (9) auxiliaire est monté dans la ligne à contrôler, dans lequel le côté primaire du transformateur (9) auxiliaire est monté en série avec les enroulements (4) en série et le côté secondaire du transformateur (9) auxiliaire est monté en série avec les enroulements (8) secondaires, et revient sur ceux-ci.
